# EUROPÄISCHE PATENTSCHRIFT

(11) **EP 2 054 691 B1**
(45) Veröffentlichungstag und Bekanntmachung des Hinweises auf die Patenterteilung: **31.03.2010**
(21) Anmeldenummer: 07788019.3
(22) Anmeldetag: 30.07.2007
(51) Int. Cl.: F28F 27/02, F01M 5/00, F01P 7/16

(54) **BYPASSVENTIL FÜR EINEN EINEM HYDRAULIKAGGREGAT NACHGEORDNETEN KÜHLER**
BYPASS VALVE FOR A COOLER CONNECTED DOWNSTREAM OF A HYDRAULIC UNIT
SOUPAPE DE DÉRIVATION POUR REFROIDISSEUR RACCORDÉ EN AVAL D'UNE MACHINE HYDRAULIQUE

(30) Priorität: 23.08.2006 DE 102006039554
(43) Veröffentlichungstag der Anmeldung: 06.05.2009
(73) Patentinhaber: ZF Friedrichshafen AG, 88038 Friedrichshafen (DE)
(72) Erfinder: MARTIN, Hans-Joachim, 88079 Kressbronn (DE); FRITZER, Anton, 88677 Markdorf (DE)
(86) Internationale Anmeldenummer: PCT/EP2007/057807
(87) Internationale Veröffentlichungsnummer: WO 2008/022874

(56) Entgegenhaltungen:
- EP-A- 1 302 711
- EP-A- 1 544 009
- WO-A-2007/036354
- DE-U1- 29 705 018
- JP-A- 2006 138 235
- US-A- 5 261 597
- US-B1- 6 253 837

## Beschreibung

Die Erfindung betrifft ein Bypassventil für einen einem Hydraulikaggregat nachgeordneten Kühler gemäß dem Oberbegriff des Patentanspruchs 1. Ein solches Bypassventil wird in der US-A-5 261 597 offenbart.

Ein typisches Anwendungsgebiet für derartige Bypassventile findet sich beispielsweise bei Ölkühlern, die einem Automatgetriebe oder einem hydraulischen Drehmomentwandler eines Kraftfahrzeuges nachgeschaltet sind. Der Kühler ist so ausgelegt, dass das Hydraulikfluid eine bestimmte, die Obergrenze eines günstigen Temperaturbereiches darstellende Höchsttemperatur nicht übersteigt. Wenn andererseits beispielsweise zu Betriebsbeginn oder bei extrem niedrigen Außentemperaturen die Temperatur des Hydraulikfluides unterhalb des günstigen Betriebsbereiches liegt, also etwa weniger als etwa 80 °C beträgt, dann soll das Hydraulikfluid am Ölkühler vorbeigeleitet werden, damit die gewünschte Betriebstemperatur bald (wieder) erreicht wird.

Aus der US 6,253,837 B1 ist bereits ein Bypassventil bekannt, bei welchem die das Verschlusselement in die Schließposition drückende Ventilfeder sich an einem thermosensitiven Stellantrieb abstützt, welcher im Normalbetrieb, also im normalen Temperaturbereich des Hydraulikfluides die Ventilfeder belastet, so dass diese das Verschlusselement an einen zugehörigen Ventilsitz drückt und damit den Bypass schließt. In diesem Betriebsmodus wird das von dem Hydraulikaggregat kommende Hydraulikfluid über den Kühler und wieder zurück zum Hydraulikaggregat geleitet. Wenn die Temperatur des Hydraulikfluides unter den unteren Wert der gewünschten Betriebstemperatur absinkt, entlastet der thermosensitive Stellantrieb die Ventilfeder so weit, dass das Schließelement unter der Wirkung einer Rückstellfeder in eine Öffnungsposition verschoben und der Bypass geöffnet wird, so dass zumindest ein Teil des vom Hydraulikaggregat kommenden Hydraulikfluides am Kühler vorbeigeleitet wird. Bei einer Ausführungsform wird gleichzeitig die Zuleitung zum Kühler geschlossen, dieser also abgekoppelt. In diesem Fall wird das gesamte Hydraulikfluid am Kühler vorbei und ungekühlt zurück in das Hydraulikaggregat geleitet. Der thermosensitive Stellantrieb ist vom Kolben-Zylinder-Typ, wobei der Zylinder mit einem thermosensitiven Material, beispielsweise Wachs, gefüllt ist, welches sich in Abhängigkeit von der Temperatur mehr oder weniger ausdehnt bzw. zusammenzieht. Das Verschlusselement ist als auf einem Schaft des Stellantriebes verschiebbar angeordneter Ring ausgebildet, damit dieser beim Auftreten von Druckspitzen im Hydraulikfluid vom Ventilsitz abgehoben werden kann, obwohl der thermosensitive Stellantrieb seine den Bypass schließende Position inne hat.

Das bekannte Bypassventil ist konstruktiv und baulich verhältnismäßig aufwendig und daher in der Herstellung vergleichsweise teuer. Es ist außerdem wegen der Verwendung eines gesonderten Stellantriebes und wegen der verschiebbaren Lagerung des Verschlusselementes anfällig für Fehlfunktionen.

Vor diesem Hintergrund liegt der Erfindung die Aufgabe zugrunde, ein Bypassventil der im Oberbegriff des Anspruchs 1 genannten Art zu schaffen, welches gegenüber der bekannten Lösung konstruktiv sowie baulich einfacher und damit weniger anfällig für Fehlfunktionen ist. Gleichzeitig soll es jedoch die gleichen Funktionen ausüben können.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich der Aufbau eines Bypassventils erheblich vereinfachen lassen müsste, wenn man die Funktionen der Ventilfeder einerseits und des thermosensitiven Stellantriebes andererseits zusammenfassen könnte.

Demnach geht die Erfindung aus von einem Bypassventil für einen einem Hydraulikaggregat nachgeordneten Kühler, umfassend ein Ventilgehäuse mit Anschlussöffnungen für eine Verbindung mit dem Hydraulikaggregat einerseits und dem Kühler andererseits, ein im Ventilgehäuse angeordnetes Verschlusselement, welches einen Bypass schließt oder öffnet, eine das Verschlusselement in die Schließposition drückende Ventilfeder, und thermosensitive Mittel, welche bei einer unter einer vorgegebenen Schwellentemperatur liegenden Temperatur des Hydraulikfluides ein Öffnen des Verschlusselementes bewirken.

Weiterhin ist dabei vorgesehen, dass die thermosensitiven Mittel durch die Ventilfeder gebildet sind, die zu diesem Zweck aus einer Memorymetall-Legierung (Formgedächtnismetall-Legierung) mit einem bei der Schwellentemperatur liegenden Umschlagpunkt gebildet ist, derart, dass sie unter dieser Schwellentemperatur kraftlos wird und ein Öffnen des Verschlusselementes unter der Wirkung des Hydraulikfluiddruckes zulässt.

Die Memorymetall-Legierung ist so ausgelegt, dass sie in dem weiter vorne genannten normalen Betriebsbereich des Hydraulikaggregates, in dem das Hydraulikfluid eine Temperatur oberhalb von etwa 80° C hat, ihre Funktion als Ventilfeder ausübt, also das Verschlusselement an den zugeordneten Ventilsitz andrückt und damit den Bypass schließt. Wenn die Betriebstemperatur des Hydraulikaggregates und damit die Temperatur des Hydraulikfluides unterhalb etwa 80° C absinken, verliert die Ventilfeder infolge einer plötzlichen Strukturänderung der Memorymetall-Legierung ihre die Form der Ventilfeder im Betriebsmodus bestimmende Federkraft. Die Ventilfeder wird dann mehr oder weniger kraftlos, so dass sie das Verschlusselement nicht mehr in Schließrichtung belastet und diesem erlaubt, beispielsweise unter der Wirkung des Hydraulikfluiddruckes vom Ventilsitz abzuheben und den Bypass zu öffnen. Im allgemeinen Fall teilt sich dabei der vom Hydraulikaggregat kommende Hydraulikfluidstrom auf einen über den Bypass direkt sowie einen über den Kühler zum Hydraulikaggregat zurückfließenden Zweig auf, so dass eine Temperaturerhöhung des Hydraulikfluides und damit des Hydraulikaggregates eintreten wird.

Gemäß der Erfindung ist vorgesehen, dass das Verschlusselement mit einem in einer Zylinderkammer des Ventilgehäuses geführten Steuerkolben verbunden ist, welcher bei geschlossenem Verschlusselement eine erste, mit einer Kühlerauslassleitung verbundene Anschlussöffnung mit einer zweiten, mit einer Hydraulikaggregat-Einlassleitung verbundenen Anschlussöffnung verbindet, und welcher bei geöffnetem Verschlusselement die zweite Anschlussöffnung mit einer dritten, mit einer von einer Kühlereinlassleitung abzweigenden Bypassleitung verbundenen Anschlussöffnung verbindet sowie die erste Anschlussöffnung verschließt.

Bei dieser konstruktiven Ausgestaltung wird für den Fall, dass der Bypass geöffnet wird, gleichzeitig der Kühler strömungstechnisch vollständig abgekoppelt, so dass der gesamte, vom Hydraulikaggregat kommende Hydraulikfluidstrom ohne Kühlung dem Hydraulikaggregat wieder zugeführt wird. Auf diese Weise wird die gewünschte Betriebstemperatur des Hydraulikaggregates besonders schnell erreicht.

Gemäß einer weiteren Ausgestaltung der Erfindung ist die Ventilfeder so ausgelegt, dass sie bei einer über der Schwellentemperatur liegenden Temperatur des Hydraulikfluides, also bei geschlossenem Bypass, das Verschlusselement zwar gegen den normalen Betriebsdruck des Hydraulikfluides geschlossen hält, bei einer darüber liegenden Druckspitze jedoch ein Öffnen des Verschlusselementes erlaubt. Auf diese Weise ist es möglich, ohne weitere konstruktive Maßnahmen den Kühler gegen Druckspitzen im Hydraulikfluidkreis zu schützen.

Die konstruktive Lösung des Bypassventils sieht vor, dass der Steuerkolben im Wesentlichen zylindrisch ausgebildet ist und einen Außendurchmesser aufweist, welcher kleiner als der Innendurchmesser der den Steuerkolben aufnehmenden Zylinderkammer ist, und dass der Steuerkolben in einem dem Verschlusselement zugewandten Endbereich durch einen an der Zylinderwand anliegenden Führungsflansch in der Zylinderkammer sowie in dem vom Verschlusselement abgewandten Endbereich in einer Aufnahmeöffnung eines die Zylinderkammer verschließenden Stopfens oder dergleichen geführt ist, wobei die Ventilfeder den Steuerkolben radial außen umgreift und sich einerseits am Führungsflansch und andererseits am Stopfen abstützt.

Gemäß einer anderen nicht erfindungsgemäßen konstruktiven Ausgestaltung des Bypassventils ist der Steuerkolben im Wesentlichen hohlzylindrisch ausgebildet, wobei die Ventilfeder innerhalb des hohlzylindrischen Steuerkolbens angeordnet ist und sich einerseits an einem inneren Absatz des hohlzylindrischen Steuerkolbens und andererseits an einem die Zylinderkammer verschließenden Stopfen oder dergleichen abstützt.

Um das Abheben des Verschlusselementes für den Bypassmodus zu unterstützen, kann gemäß einer weiteren Ausgestaltung der Erfindung an der der Ventilfeder abgewandten Seite des Verschlusselementes eine der Ventilfeder entgegenwirkende, sich im Ventilgehäuse abstützende Zusatzfeder vorgesehen sein.

Die Erfindung lässt sich anhand von Ausführungsbeispielen weiter erläutern. Dazu ist der Beschreibung eine Zeichnung beigefügt.
In dieser zeigt:
- Fig. 1: schematisch in einem Längsschnitt ein Bypassventil in einer Position, bei welcher der Bypass geschlossen ist,
- Fig. 2: eine Darstellung gemäß der Fig. 1, jedoch bei geöffnetem By- pass und
- Fig. 3: in einer Ansicht ähnlich den Fig. 1 und 2 ein Bypassventil in ei- ner anderen konstruktiven Ausgestaltung, die nicht Gegenstand der Ansprüche ist.

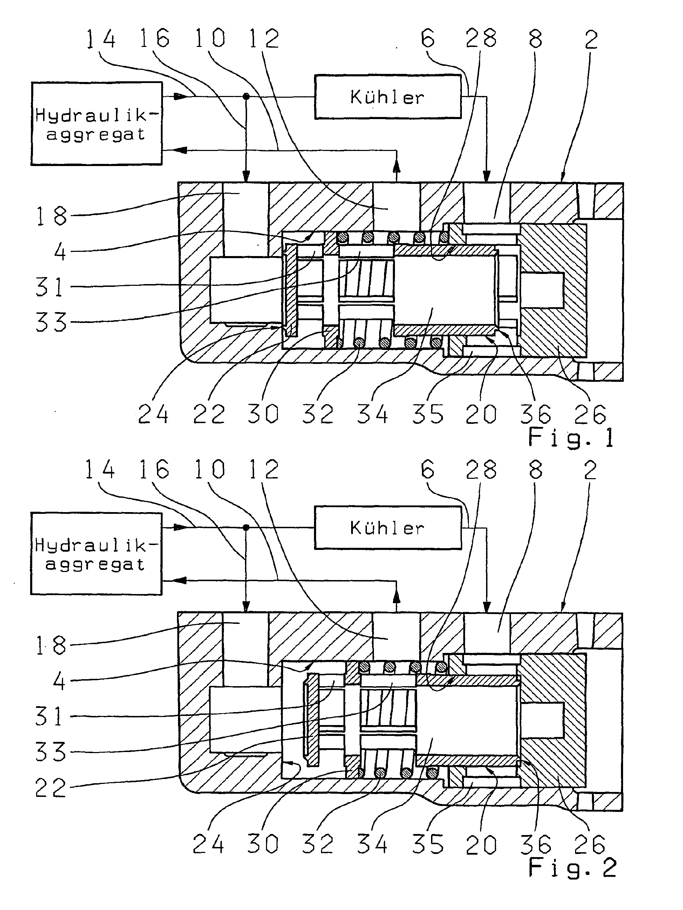

Das in den Fig. 1 und 2 dargestellte Bypassventil umfasst ein Ventilgehäuse 2 mit einer darin ausgebildeten Zylinderkammer 4. Die Zylinderkammer 4 ist an ihrem einen, in den Fig. 1 und 2 linken Ende geschlossen und an ihrem anderen Ende offen.

In die Zylinderkammer 4 münden von außen her eine erste, mit einer Kühlerauslassleitung 6 verbundene Anschlussöffnung 8, eine zweite, mit einer Hydraulikaggregat-Einlassleitung 10 verbundene Anschtussöffnung 12 und eine dritte, mit einer von einer Kühlereinlassleitung 14 abzweigenden Bypassleitung 16 verbundene Anschlussöffnung 18.

In der Zylinderkammer 4 ist ein Steuerkolben 20 verschiebbar angeordnet. An dem der dritten Anschlussöffnung 18 zugewandten Ende des Steuerkolbens 20 ist ein ventiltellerartiges Verschlusselement 22 angeordnet, welches einen Bypass öffnen bzw. schließen kann. Dazu bildet die Zylinderkammer 4 in ihrem der dritten Anschlussöffnung 18 zugewandten Bereich einen nach innen vorspringenden Absatz aus, welcher als Ventilsitz 24 für das Verschlusselement 22 dient.

Das in den Fig. 1 und 2 rechte, offene Ende der Zylinderkammer 4 ist durch einen Stopfen 26 abdichtend verschlossen, welcher an seinem dem Steuerkolben 20 zugewandten Ende eine Aufnahmeöffnung 28 zur Aufnahme und Führung des Steuerkolbens 20 bildet. Im Bereich der Aufnahmeöffnung 28 ist die zylindrische Wand des Stopfens 26 derart durchbrochen, dass die Aufnahmeöffnung 28 mit der ersten Anschlussöffnung 8 strömungstechnisch kommuniziert.

Im Beispiel der Fig. 1 und 2 hat der Steuerkolben 20 im Wesentlichen einen Außendurchmesser, welcher kleiner als der Innendurchmesser der den Steuerkolben 20 aufnehmenden Zylinderkammer 4 ist. In seinem dem Verschlusselement 22 zugewandten Endbereich ist ein an der Zylinderwand 4 anliegender Führungsflansch 30 ausgebildet, über den der Steuerkolben 20 in der Zylinderkammer 4 geführt ist. Das der Anschlussöffnung 8 zugewandte Ende des Steuerkolbens 20 ist, wie bereits erwähnt wurde, in der Aufnahmeöffnung 28 des Stopfens 26 geführt.

Der Steuerkolben 20 ist als Hohlzylinder ausgebildet, wobei die Zylinderwand in dem der Anschlussöffnung 18 zugewandten Endbereich in axialer Richtung vor und hinter dem Führungsflansch 30 radiale Durchbrechungen 31 bzw. 33 hat, so dass der Innenraum 34 des Steuerkolbens 20 mit der Außenseite hinsichtlich einer Fluidströmung kommuniziert. Die Zylinderwand 4 ist in dem in der Aufnahmeöffnung 28 geführten Endbereich des Steuerkolbens 20 geschlossen, während das zugeordnete rechte Ende 36 des hohlzylindrischen Steuerkolbens 20 offen ist. Außerdem ist der Aufnahmeraum des Stopfens 26 mit zumindest einer radialen Durchbrechung 35 ausgestattet, die ihrerseits mit der ersten Anschlussöffnung 8 strömungstechnisch kommuniziert.

Der Steuerkolben 20 wird durch eine diesen umgebende, als Schraubenfeder ausgebildete Ventilfeder 32, die sich einerseits an der linken Stirnseite des Stopfens 26 abstützt und andererseits am Führungsflansch 30 Steuerkolbens 20 anliegt, so belastet, dass das Verschlusselement 22 an den Ventilsitz 24 angelegt wird. Die Ventilfeder 32 besteht aus einer Memorymetall-Legierung mit einem bei der Schwellentemperatur des Hydraulikfluides liegenden Umschlagpunkt. Dies hat zur Folge, dass die Ventilfeder 32 bei einer unter dieser Schwellentemperatur liegenden Temperatur des Hydraulikfluides kraftlos wird und ein Öffnen des Verschlusselementes 22 beispielsweise unter der Wirkung des über die Bypassleitung 16 herangeführten Hydraulikfluides zulässt.

Die Funktion des Bypassventils ist wie folgt: Wenn das Hydraulikfluid eine normale Betriebstemperatur hat, die beispielsweise über 80 °C liegt, dann wird das Verschlusselement 22 durch die Ventilfeder 32 an den Ventilsitz 24 gedrückt, so dass ein Zulauf von Hydraulikfluid über die dritte Anschlussöffnung 18 verschlossen ist. Gleichzeitig ist das in den Fig. 1 und 2 rechte Ende 36 des Steuerkolbens 20 vom Stopfen 26 abgehoben, so dass über die erste Anschlussöffnung 8, die Durchbrechung 35, das offene Ende 36 des Steuerkolbens 20, den Innenraum 34 des Steuerkolbens 20, die Durchbrechung 33 der Steuerkolbenwand und die zweite Anschlussöffnung 12 eine Verbindung von der Kühlerauslassleitung 6 zur Hydraulikaggregat-Einlassleitung 10 hergestellt ist. Bei dieser einem Kühlmodus entsprechenden Stellung des Bypassventils wird das gesamte Hydraulikfluid über den Kühler geleitet und gekühlt.

Wenn die Temperatur des Hydraulikfluides unter etwa 80 °C absinkt, wird die Ventilfeder 32 aufgrund ihrer Eigenschaften kraftlos, so dass unter der Wirkung des über die Bypassleitung 16 und die Anschlussöffnung 18 herangeführten Hydraulikfluides das Verschlusselement 22 vom Ventilsitz 24 abheben und der Steuerkolben 20 nach rechts verschoben wird, bis sein Ende 36 am Stopfen 26 anliegt und dadurch geschlossen wird (Fig. 2). Dadurch wird ein Zulauf über die erste Anschlussöffnung 8 versperrt, während über die dritte Anschlussöffnung 18, die Durchbrechung 31 in der Wand des Steuerkolbens 20, den Innenraum 36 des Steuerkolbens, dessen Durchbrechung 33 und die zweite Anschlussöffnung 12 eine Verbindung zwischen der Bypassleitung 16 und der Hydraulikaggregat-Einlassleitung 10 hergestellt wird. In diesem Bypassmodus wird das gesamte Hydraulikfluid am Kühler vorbeigeführt, so dass es nicht gekühlt wird.

Falls ein Betriebsmodus gewünscht wird, bei welchem ein Teil des Hydraulikfluides über den Kühler fließt, so könnte dies dadurch erreicht werden, dass - beispielsweise über Durchbrechungen in der Steuerkolbenwand - eine Verbindung der ersten Anschlussöffnung 8 mit dem Innenraum 36 bestehen bleibt, wie nicht im einzelnen dargestellt ist.

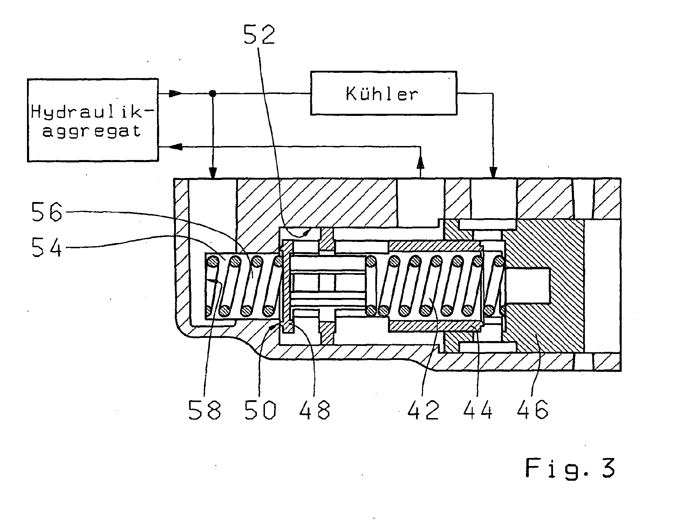

Fig. 3 zeigt in einem anderen nicht erfindungsgemäßen Ausführungsbeispiel ein Bypassventil, welches zwar die gleiche Funktion hat wie das Bypassventil in den Fig. 1 und 2, sich jedoch baulich von diesem geringfügig unterscheidet. Im Gegensatz zum Ausführungsbeispiel gemäß den Fig. 1 und 2 ist die Ventilfeder 42 aus einer Memorymetall-Legierung im Innenraum des Steuerkolbens 44 angeordnet und stützt sich einerseits am Stopfen 46 und andererseits beispielsweise an einem im Innenraum des Steuerkolbens 44 ausgebildeten, nach innen vorspringenden Absatz ab. Die Funktion im Kühlmodus bzw. im Bypassmodus ist die gleiche wie bei dem Ausführungsbeispiel gemäß den Fig. 1 und 2, so dass sie hier nicht nochmals erläutert werden muss.

Um das Abheben des Verschlusselementes 48 vom zugeordneten Ventilsitz 50 für den Bypassmodus zu unterstützen, ist in dem in Fig. 3 linken, gegenüber der übrigen Zylinderkammer 52 im Durchmesser reduzierten Endbereich 54 eine Zusatzfeder 56 angeordnet, die sich einerseits am axialen Boden 58 dieses Endbereiches 54 abstützt, und anderseits an dem Verschlusselement 48 anliegt.

### Bezugszeichen

- 2: Ventilgehäuse
- 4: Zylinderkammer
- 6: Kühlerauslassleitung
- 8: Anschlussöffnung
- 10: Hydraulikaggregat-Einlassleitung
- 12: Anschlussöffnung
- 14: Kühlereinlassleitung
- 16: Bypassleitung
- 18: Anschlussöffnung
- 20: Steuerkolben
- 22: Verschlusselement
- 24: Ventilsitz
- 26: Stopfen
- 28: Aufnahmeöffnung
- 30: Führungsflansch
- 31: Durchbrechung
- 32: Ventilfeder
- 33: Durchbrechung
- 34: Innenraum
- 35: Durchbrechung
- 36: Ende von 20
- 42: Ventilfeder
- 44: Steuerkolben
- 46: Stopfen
- 48: Verschlusselement
- 50: Ventilsitz
- 52: Zylinderkammer
- 54: Endbereich
- 56: Zusatzfeder
- 58: Boden

## Patentansprüche

1. Bypassventil für einen einem Hydraulikaggregat nachgeordneten Kühler, umfassend ein Ventilgehäuse (2) mit Anschlussöffnungen (8, 12, 18) für eine Verbindung mit dem Hydraulikaggregat einerseits und dem Kühler andererseits, ein im Ventilgehäuse angeordnetes Verschlusselement (22), welches einen Bypass schließt oder öffnet, eine das Verschlusselement (22) in die Schließposition drückende Ventilfeder (32), und thermosensitive Mittel, weiche bei einer unter einer vorgegebenen Schwellentemperatur liegenden Temperatur des Hydraulikfluides ein Öffnen des Verschlusselementes bewirken, wobei die thermosensitiven Mittel durch die Ventilfeder (32, 42) gebildet sind, die zu diesem Zweck aus einer Memorymetall-Legierung mit einem bei der Schwellentemperatur liegenden Umschlagpunkt gebildet ist derart, dass sie unter dieser Schwellentemperatur kraftlos wird und ein Öffnen des Verschlusselementes (22) unter der Wirkung des Hydraulikfluiddruckes zulässt, wobei das Verschlusselement (22) mit einem in einer Zylinderkammer (4) des Ventilgehauses (2) geführten Steuerkolben (20) verbunden ist und der Steuerkolben (20) im Wesentlichen zylindrisch ist und einen Außendurchmesser hat, welcher kleiner als der Innendurchmesser der den Steuerkolben (20) aufnehmenden Zylinderkammer (4) ist **dadurch gekennzeichnet, dass** der Steuerkolben (20) in einem dem Verschlusselement (22) zugewandten Endbereich durch einen an der Zylinderwand anliegenden Führungsflansch (30) in der Zylinderkammer (4) sowie in dem vom Verschlusselement (22) abgewandten Endbereich in einer Aufnahmeöffnung (28) eines die Zylinderkammer (4) verschließenden Stopfens (26) oder dergleichen geführt ist, und dass die Ventilfeder (32) den Steuerkolben (20) außen umgibt und sich einerseits am Führungsflansch (30) und andererseits am Stopfen (26) abstützt.

2. Bypassventil nach Anspruch 1, **dadurch gekennzeichnet, dass** das Ventilgehäuse (2) eine erste, mit einer Kühlerauslassleitung (6) verbundene Anschlussöffnung (8), eine zweite, mit einer Hydraulikaggregat-Einlassleitung (10) verbundene Anschlussöffnung (12) und eine dritte, mit einer von einer Kühlereinlassleitung (14) abzweigenden Bypassleitung (16) verbundene Anschlussöffnung (18) hat, dass der Steuerkolben bei geschlossenem Verschlusselement (22) die erste Anschlussöffnung (8) mit der zweiten Anschlussöffnung (12) verbindet, und bei geöffnetem Verschlusselement (22) die zweite Anschlussöffnung (12) mit der dritten Anschlussöffnung (18) verbindet sowie die erste Anschlussöffnung (8) verschließt.

3. Bypassventil nach Anspruch 1 oder 2, **dadurch gekennzeichnet, dass** die Ventilfeder (32, 42) so ausgelegt ist, dass sie bei einer über der Schwellentemperatur liegenden Temperatur des Hydraulikflurdes das Verschlusselement (22) gegen den normalen Betriebsdruck des Hydraulikfluides geschlossen hält, bei einer darüber liegenden Druckspitze jedoch ein Öffnen des Verschlusselementes (22) erlaubt.

4. Bypassventil nach zumindest einem der Ansprüche 1 bis 3, **dadurch gekennzeichnet, dass** an der der Ventilfeder (42) abgewandten Seite des Verschlusselementes (48) eine der Ventilfeder (42) entgegenwirkende Zusatzfeder (56) angeordnet ist.

5. Bypassventil nach zumindest einem der Ansprüche 1 bis 4, **dadurch gekennzeichnet, dass** die Schwellentemperatur der Memorymetall-Legierung der Ventilfeder (32, 42) etwa 80 °C beträgt.

## Claims

1. Bypass valve for a cooler arranged downstream of a hydraulic assembly, comprising a valve housing (2) with connecting orifices (8, 12, 18) for a connection to the hydraulic assembly, on the one hand, and to the cooler, on the other hand, a closing element (22) which is arranged in the valve housing and which closes or opens a bypass, a valve spring (32) pressing the closing element (22) into the closing position, and thermosensitive means which cause an opening of the closing element when the hydraulic fluid is at a temperature lying below a predetermined threshold temperature, the thermosensitive means being formed by the valve spring (32, 42) which, for this purpose, is formed from a memory metal alloy with a transition point lying at the threshold temperature, in such a way that the said valve spring becomes force-free below this threshold temperature and permits an opening of the closing element (22) under the action of the hydraulic-fluid pressure, the closing element (22) being connected to a control piston (20) guided in a cylinder chamber (4) of the valve housing (2), and the control piston (20) being essentially cylindrical and having an outside diameter which is smaller than the inside diameter of the cylinder chamber (4) receiving the control piston (20), **characterized in that** the control piston (20), in an end region facing the closing element (22), is guided by a guide flange (30) bearing against the cylinder wall and located in the cylinder chamber (4) and, in the end region facing away from the closing element (22), in a reception orifice (28) of a plug (26) or the like closing the cylinder chamber (4), and **in that** the valve spring (32) surrounds the control piston (20) externally and is supported, on the one hand, on the guide flange (30) and, on the other hand, on the plug (26).

2. Bypass valve according to Claim 1, **characterized in that** the valve housing (2) has a first connecting orifice (8) connected to a cooler outlet line (6), a second connecting orifice (12) connected to a hydraulic-assembly inlet line (10), and a third connecting orifice (18) connected to a bypass line (16) branching off from a cooler inlet line (14), and **in that** the control piston, with a closed closing element (22), connects the first connecting orifice (8) to the second connecting orifice (12) and, with an open closing element (22), connects the second connecting orifice (12) to the third connecting orifice (18) and closes the first connecting orifice (8).

3. Bypass valve according to Claim 1 or 2, **characterized in that** the valve spring (32, 42) is designed so that, when the hydraulic fluid is at a temperature lying above the threshold temperature, it keeps the closing element (22) closed counter to the normal operating pressure of the hydraulic fluid, but, at a pressure peak lying above this, permits an opening of the closing element (22).

4. Bypass valve according to at least one of Claims 1 to 3, **characterized in that** an additional spring (56) counteracting the valve spring (42) is arranged on that side of the closing element (48) which faces away from the valve spring (42).

5. Bypass valve according to at least one of Claims 1 to 4, **characterized in that** the threshold temperature of the memory metal alloy of the valve spring (32, 42) amounts to about 80°C.

## Revendications

1. Soupape de dérivation pour un refroidisseur monté en aval d'une machine hydraulique, comprenant un boîtier de soupape (2) avec des ouvertures de raccordement (8, 12, 18) pour une connexion à la machine hydraulique d'une part et au refroidisseur d'autre part, un élément de fermeture (22) disposé dans le boîtier de soupape, qui ferme ou ouvre une dérivation, un ressort de soupape (32) pressant l'élément de fermeture (22) dans la position de fermeture, et des moyens thermosensibles, qui, dans le cas où la température du fluide hydraulique est inférieure à une température seuil prédéterminée, provoquent une ouverture de l'élément de fermeture, les moyens thermosensibles étant formés par le ressort de soupape (32, 42) qui est formé à cet effet d'un alliage de métal à mémoire de forme avec un point d'inversion situé à la température seuil, de telle sorte qu'il soit sans force en-dessous de cette température seuil, et qu'il autorise une ouverture de l'élément de fermeture (22) sous l'effet de la pression de fluide hydraulique, l'élément de fermeture (22) étant connecté à un piston de commande (20) guidé dans une chambre cylindrique (4) du boîtier de soupape (2) et le piston de commande (20) étant essentiellement cylindrique et ayant un diamètre extérieur qui est inférieur au diamètre intérieur de la chambre cylindrique (4) recevant le piston de commande (20), **caractérisée en ce que** le piston de commande (20) est guidé, dans une région d'extrémité tournée vers l'élément de fermeture (22) par une bride de guidage (30) s'appliquant contre la paroi cylindrique, dans la chambre cylindrique (4), ainsi que dans la région d'extrémité opposée à l'élément de fermeture (22), dans une ouverture de réception (28) d'un bouchon (26) ou similaire fermant la chambre cylindrique (4), et **en ce que** le ressort de soupape (32) entoure le piston de commande (20) à l'extérieur et s'appuie d'une part contre la bride de guidage (30) et d'autre part contre le bouchon (26).

2. Soupape de dérivation selon la revendication 1, **caractérisée en ce que** le boîtier de soupape (2) a une première ouverture de raccordement (8) connectée à une conduite de sortie du refroidisseur (6), une deuxième ouverture de raccordement (12) connectée à une conduite d'entrée de la machine hydraulique (10), et une troisième ouverture de raccordement (18) connectée à une conduite de dérivation (16) partant d'une conduite d'entrée du refroidissement (14), **en ce que** le piston de commande, lorsque l'élément de fermeture (22) est fermé, relie la première ouverture de raccordement (8) à la deuxième ouverture de raccordement (12), et lorsque l'élément de fermeture (22) est ouvert, relie la deuxième ouverture de raccordement (12) à la troisième ouverture de raccordement (18) et ferme la première ouverture de raccordement (8).

3. Soupape de dérivation selon la revendication 1 ou 2, **caractérisée en ce que** le ressort de soupape (32, 42) est réalisé de telle sorte qu'il maintienne fermé l'élément de fermeture (22) à l'encontre de la pression de fonctionnement normale du fluide hydraulique au cas où la température du fluide hydraulique est au-dessus de la température seuil, mais qu'il permette toutefois une ouverture de l'élément de fermeture (22) dans le cas d'une pointe de pression encore supérieure.

4. Soupape de dérivation selon au moins l'une quelconque des revendications 1 à 3, **caractérisée en ce que** l'on dispose du côté de l'élément de fermeture (48) opposé au ressort de soupape (42) un ressort supplémentaire (56) agissant à l'encontre du ressort de soupape (42).

5. Soupape de dérivation selon au moins l'une quelconque des revendications 1 à 4, **caractérisée en ce que** la température seuil de l'alliage à mémoire de forme du ressort de soupape (32, 42) vaut environ 80°C.
